# EUROPÄISCHE PATENTSCHRIFT

(11) **EP 2 767 378 B1**
(45) Veröffentlichungstag und Bekanntmachung des Hinweises auf die Patenterteilung: **27.04.2016**
(21) Anmeldenummer: 14154583.0
(22) Anmeldetag: 11.02.2014
(51) Int. Cl.: B29C 44/18, C08J 9/32, E06B 3/263, F16L 59/00, E06B 3/267

(54) **Verwendung einer Polymer-Zusammensetzung zum Ausschäumen mindestens einer Hohlkammer eines Kunststoff-Hohlkammerprofils sowie dadurch erhaltenes Kunststoff-Hohlkammerprofil**
Use of a polymer composition for filling at least one hollow chamber of a plastic hollow chamber profile and plastic hollow chamber profile obtained thereby
Utilisation d'une composition polymère pour l'expansion d'au moins une chambre creuse d'un profil de chambre creuse en matière synthétique et profil de chambre creuse en matière synthétique ainsi obtenu

(30) Priorität: 18.02.2013 DE 102013101592
(43) Veröffentlichungstag der Anmeldung: 20.08.2014
(73) Patentinhaber: REHAU AG + Co, 95111 Rehau (DE)
(72) Erfinder: Niehoff, Ansgar, 95111 Rehau (DE); Dietz, Michael, 91093 Heßdorf (DE); Schmidt, Steven, 95182 Döhlau (DE); Bauer, Ralf, 90768 Fürth (DE); Betzold, Stefanie, 91074 Herzogenaurach (DE)

(56) Entgegenhaltungen:
- EP-A1- 2 062 717
- EP-A1- 2 312 079
- EP-A1- 2 641 717
- DE-A1-102007 062 000

## Beschreibung

Die vorliegende Erfindung liegt auf dem Gebiet der Verwendung von Polymer-Zusammensetzungen zum Ausschäumen mindestens einer Hohlkammer eines Kunststoff-Hohlkammerprofils, insbesondere eines Kunststoff-Fensterprofils oder eines Kunststoff-Türprofils, sowie auf derartige zumindest teilweise ausgeschäumte Kunststoff-Hohlkammerprofile.

Zur Verbesserung der thermischen Isolierung von beispielsweise Kunststoff-Fensterprofilen werden einzelne oder mehrere Hohlkammern der jeweiligen Profile zumindest teilweise mit Schaum gefüllt. Dies kann beispielsweise dadurch erfolgen, dass nach der Extrusion des Profils ein fertiges Schaum-Formteil beispielsweise aus einem Polyurethan-Schaum in eine Hohlkammer des bereits extrudierten Hohlkammerprofils eingeschoben wird. Dazu ist es jedoch erforderlich, das Schaum-Formteil händisch in das vorhandene Profil einzuführen. Daher gibt es Bestrebungen, eine oder mehrere Hohlkammern der Profile während oder nach der Extrusion auszuschäumen. Ein Ausschäumen der fertigen Profile nach der Extrusion ist unter Einsatz verschiedener Verfahren möglich, beispielsweise unter Verwendung einer Lanze oder durch Anwendung eines reduzierten Drucks. Ein Verfahren zum Ausschäumen der Profile während der Extrusion, dem so genannten Inline-Schäumen, ist beispielsweise aus der WO 2012/052140 A1 bekannt. Für das Inline-Schäumen können sowohl Schäume auf Basis von Duroplasten als auch auf Basis von Thermoplasten eingesetzt werden. Ein sehr gut dämmender Polyurethan-Dämmschaum ist in der WO 2011/032193 A2 beschrieben.

Aus der DE 10 2007 062 000 A1 ist die Verwendung einer Polymerzusammensetzung zur thermischen Isolierung bekannt, umfassend einen Polyurethan-Schaum, der 1 bis 5 Vol.-% Micro-Kügelchen (Expancel) enthält.

Nachteilig an derartigen Polyurethan-Dämmschäumen wird gesehen, dass mit diesen eine alterungsbedingte Zunahme der Wärmeleitfähigkeit einhergeht, d.h. die Dämmwirkung von Polyurethan-Schäumen nimmt mit der Zeit ab. Darüber hinaus tritt bei der Bildung von Polyurethan-Schäumen eine hohe Reaktionswärme auf, die zu irreversiblen Verformungen der Wände des auszuschäumenden Kunststoff-Hohlkammerprofils, in Einzelfällen sogar zu einem Wegschmelzen von Trennwänden zwischen einzelnen Hohlkammern führen kann, so dass ein betroffenes Profil unbrauchbar werden kann. Darüber hinaus verbindet sich das Material des Polyurethan-Schaums mit dem Polymermaterial des auszuschäumenden Kunststoff-Hohlkammerprofils innig. Damit kann der im Profil aufgenommene Polyurethan-Schaum nicht mehr rückstandsfrei aus der Hohlkammer entfernt werden, was ein sortenreines Recycling der Polymermaterialien ausschließt.

Damit liegt der vorliegenden Erfindung die Aufgabe zugrunde, die Verwendung einer Polymer-Zusammensetzung zum Ausschäumen von Hohlkammern eines Kunststoff-Hohlkammerprofils, insbesondere eines Kunststoff-Fensterprofils oder eines Kunststoff-Türprofils, zur Verfügung zu stellen, die die Nachteile des Stands der Technik überwindet. Insbesondere soll das erhaltene ausgeschäumte Kunststoff-Hohlkammerprofil eine hohe und über einen längeren Zeitraum stabile Dämmwirkung aufweisen und durch den Schäumprozess hinsichtlich seiner Form sowie der Anordnung seiner Hohlkammern nicht negativ beeinträchtigt werden.

Diese und andere Aufgaben werden durch die Verwendung einer Polymer-Zusammensetzung mit den Merkmalen des Anspruches 1 bzw. durch ein Kunststoff-Hohlkammerprofil, insbesondere ein Kunststoff-Fensterprofil oder ein Kunststoff-Türprofil, mit den Merkmalen des Patentanspruchs 11 gelöst. Bevorzugte Ausführungsformen der vorliegenden Erfindung sind in den jeweils davon abhängigen Ansprüchen beschrieben.

Gemäß der vorliegenden Erfindung wurde überraschenderweise erkannt, dass es auch bei hohen Temperaturen, wie sie beim Extrusionsprozess eines Kunststoff-Hohlkammerprofils, insbesondere eines Kunststoff-Fensterprofils oder eines Kunststoff-Türprofils, auftreten, zu keinem Verkleben zwischen dem Kunststoff-Hohlkammerprofil und einem darin eingebrachten Polymerschaum kommt, wenn der Polymerschaum durch Erwärmen einer Polymer-Zusammensetzung, die 25 Gewichtsteile bis 75 Gewichtsteile, bezogen auf das Gesamt-gewicht der Komponenten (A) und (B), eines Polymermaterials als Komponente (A), 30 Gewichtsteile bis 75 Gewichtsteile, bezogen auf das Gesamtgewicht der Komponenten (A) und (B), polymerer Mikrohohlkörper als Komponente (B) und ggf. übliche Zusatzstoffe umfasst, wobei die polymeren Mikrohohlkörper eine Hülle aus einem Polymer und ein darin aufgenommenes flüssiges Treibmittel umfassen, dessen Siedepunkt unterhalb der Glasübergangstemperatur des Polymers der Hülle liegt und die polymeren Mikrohohlkörper gegenüber dem Treibmittel im flüssigen oder gasförmigen Zustand im Wesentlichen undurchlässig sind. Der erhaltene Polymerschaum ist gegenüber üblichen Polyurethan-Schäumen vergleichsweise weich, so dass eine Verformung der damit gefüllten Hohlkammern und auch des gesamten Kunststoff-Hohlkammerprofils vermieden werden kann. Da es sich darüber hinaus im Prinzip um einen physikalischen Aufschäumprozess handelt, tritt keine Reaktionswärme auf, was ebenfalls zur Formstabilität der ausgeschäumten Kunststoff-Hohlkammerprofile beiträgt. Die erhaltenen Polymer-Schäume zeigen eine geringe Wärmeleitfähigkeit, die vorteilhafterweise über einen langen Zeitraum erhalten bleibt.

Dementsprechend liegt die vorliegende Erfindung in der Verwendung einer Polymer-Zusammensetzung, die
(A) 25 Gewichtsteile bis 70 Gewichtsteile, bezogen auf das Gesamtgewicht der Komponenten (A) und (B), eines Polymermaterials;
(B) 30 Gewichtsteile bis 75 Gewichtsteile, bezogen auf das Gesamtgewicht der Komponenten (A) und (B), polymerer Mikrohohlkörper; und ggf.
(C) übliche Zusatzstoffe
umfasst, zum Ausschäumen mindestens einer Hohlkammer eines Kunststoff-Hohlkammerprofils, insbesondere eines Kunststoff-Fensterprofils oder eines Kunststoff-Türprofils, wobei die polymeren Mikrohohlkörper eine Hülle aus einem Polymer und ein darin aufgenommenes flüssiges Treibmittel umfassen, dessen Siedepunkt unterhalb der Glasübergangstemperatur des Polymers der Hülle liegt und die polymeren Mikrohohlkörper gegenüber dem Treibmittel im flüssigen oder gasförmigen Zustand im Wesentlichen undurchlässig sind.

Die hierin beschriebenen Gewichtsanteile sind in Gewichtsteilen oder Gew.-% angegeben und beziehen sich jeweils auf das Gesamtgewicht der Komponenten (A) und (B) als 100 Gewichtsteile bzw. 100 Gew.-%. Wie hierhin verwendet, beziehen sich die Ausdrücke "fest", "flüssig" und "gasförmig" auf den Aggregatszustand des betreffenden Materials bei Raumtemperatur und Normaldruck, sofern nichts anderes angegeben ist. Wie hierhin verwendet, bedeutet der Begriff "gegenüber dem flüssigen Treibmittel im Wesentlichen undurchlässig", dass nach einem Zeitraum von 10 Jahren noch mindestens 70 Gew-%, bevorzugt mindestens 80 Gew-% des ursprünglich in den polymeren Mikrohohlkörpern aufgenommenen flüssigen Treibmittels in den polymeren Mikrohohlkörpern vorhanden ist. Diese Undurchlässigkeit der polymeren Mikrohohlkörper gegenüber dem Treibmittel im flüssigen und gasförmigen Zustand trägt dazu bei, dass die niedrige Wärmeleitfähigkeit des erfindungsgemäß eingesetzten Schaummaterials über einen langen Zeitraum erhalten bleibt.

Erfindungsgemäß verwendete polymere Mikrohohlkörper sind beispielsweise in der US 3,615,972 beschrieben. Hinsichtlich der Materialien und der Zusammensetzung, des Aufbaus, der Eigenschaften und Herstellung der erfindungsgemäß verwendeten polymeren Mikrohohlkörper einschließlich des darin enthaltenen flüssigen Treibmittels wird ausdrücklich auf die US 3,615,972 Bezug genommen. Die darin beschriebenen polymeren Mikrohohlkörper werden im Stand der Technik in geringen Gewichtsanteilen von üblicherweise 1 Gew.-% bis 5 Gew.-% zur Bildung von geschäumten polymeren Formteilen eingesetzt.

Als bevorzugte Materialien für das Polymermaterial des Kunststoff-Hohlkammerprofils haben sich thermoplastische Polymere wie Polyvinylchlorid (PVC), Polyethylen (insbesondere Polyethylen hoher Dichte HDPE) und Polypropylen (insbesondere statistisches Polypropylen PP-R) sowie Gemische, Copolymere und Blends der genannten Polymere aus Gründen ihres bevorzugten Einsatzes zur Extrusion von Kunststoff-Hohlkammerprofilen erwiesen, wobei Polyvinylchlorid besonders bevorzugt ist.

Es ist erfindungsgemäß bevorzugt, wenn das Polymermaterial der Komponente (A) zu einem Polymermaterial des Kunststoff-Hohlkammerprofils nicht kompatibel ist. Dies ist bevorzugt dann der Fall, wenn sich die beiden Polymermaterialien auch im geschmolzenen Zustand nicht oder nur in geringem Umfang (vorzugsweise maximal jeweils 10 Gew.-%) miteinander vermischen. Ebenso oder alternativ ist es bevorzugt, wenn diese Polymermaterialien nicht oder nur geringfügig aneinander haften. Auf diese Weise lässt sich der Polymerschaum nach der Verwendung des erfindungsgemäßen Kunststoff-Hohlkammerprofils weitgehend rückstandsfrei aus dem Kunststoff-Hohlkammerprofils entnehmen. Als bevorzugte Materialien für das Polymermaterial als Komponente (A) in der erfindungsgemäß verwendeten Polymer-Zusammensetzung haben sich daher thermoplastische Polymere wie Polyethylen (insbesondere Polyethylen hoher Dichte HDPE) und Polypropylen (insbesondere statistisches Polypropylen PP-R) beim Einsatz von PVC-Hohlkammerprofilen sowie allgemein Polymere auf Basis von Ethylen-Vinylacetat-Monomeren (EVA) sowie Gemische, Copolymere und Blends der genannten Polymere erwiesen. Darüber hinaus sind auch duroplastische Polymere wie Epoxidharze, Phenol-Formaldehydharze, Harnstoff-Formaldehydharze und Melaminformaldehydharze als Materialien für das Polymermaterial als Komponente (A) bevorzugt. Letztlich werden auch polymere Urethan-Alkyd-Harze, polymere Acrylharze, polymere Alkydharze sowie polymere Epoxidharze als bevorzugte Materialien für das Polymermaterial als Komponente (A) in der erfindungsgemäß verwendeten Polymer-Zusammensetzung eingesetzt.

Es kann auch von Nutzen sein, wenn als Polymermaterial der Komponente (A) das Polymermaterial des Kunststoff-Hohlkammerprofils eingesetzt wird. Dabei ist es besonders bevorzugt, wenn es sich bei dem Polymermaterial der Komponente (A) sowie beim Polymermaterial des Kunststoff-Hohlkammerprofils um Polyvinylchlorid (PVC) insbesondere um Hart-PVC (PVC-U) handelt. Wenn es sich beim Polymermaterial der Komponente (A) um PVC handelt, kann das Brandschutzverhalten der Schaumzusammensetzung positiv beeinflusst werden, d.h. durch die PVC-Matrix ist die Schaumzusammensetzung schwer entflammbar. Die durch die PVC-Matrix unter Umständen auftretende verstärkte Haftung der Schaumzusammensetzung an dem PVC-Kunststoff-Hohlkammerprofil ist nicht problematisch, weil es sich ja um identische Polymere handelt, die gemeinsam dem Recycling zugeführt werden können.

Gemäß der vorliegenden Erfindung handelt es sich bei den erfindungsgemäß verwendeten polymeren Hohlkörpern ganz besonders bevorzugt um expandierbare Mikrohohlkugeln, die durch Expansion in expandierte Mikrohohlkugeln überführt werden können. Derartige Mikrohohlkugeln sind im Wesentlichen aus einer gasdichten, polymeren Außenschicht und einem darin eingeschlossenen, flüssigen oder gasförmigen Treibmittel aufgebaut. Die Außenschicht dieser polymeren Mikrohohlkugeln verhält sich sowohl im nicht expandierten als auch im expandierten Zustand üblicherweise wie ein Thermoplast, damit ein Erweichen und dadurch die Expansion der expandierbaren Mikrohohlkugeln ermöglicht wird, wenn sich das in die polymere Mikrohohlkörper eingeschlossene Treibmittel aufgrund einer Temperaturerhöhung ausdehnt.

Bevorzugte Materialien für die polymeren Mikrohohlkörper bzw. Mikrohohlkugeln sind Homopolymere und/oder Copolymere von Monomeren, wie Acrylsäure, Acrylsäureester, Methacrylsäure, Methacrylsäureester, Styrol, Acrylnitril, Methacrylnitril und ähnliche Monomere sowie Mischungen der genannten Monomere.

Um eine effiziente Schaumbildung zu gewährleisten, ist es bevorzugt, dass das flüssige Treibmittel bei Raumtemperatur in einem Volumenanteil, bezogen auf das Gesamtvolumen der polymeren Mikrohohlkörper von mindestens 20 Volumenprozent, vorzugsweise 50 Volumenprozent bis 95 Volumenprozent in den polymeren Mikrohohlkörpern aufgenommen ist. Als flüssiges Treibmittel werden gemäß der vorliegenden Erfindung bevorzugt niedrige Kohlenwasserstoffe wie Propan, n-Butan, Isobutan, Isopentan, n-Pentan, Neopentan, Cyclopentan, Hexan, Cyclohexan, Heptan und Butylether sowie halogenierte Kohlenwasserstoffe wie Methylchlorid, Methylenchlorid, Trichlormethan, Trichlorfluormethan und Dichlordifluormethan eingesetzt.

Die polymeren Mikrohohlkörper können nach bekannten Verfahren hergestellt werden, wie sie beispielsweise aus der US 3,615,972 bekannt sind. Durch den Expansionsprozess wird der mittlere Durchmesser der polymeren Mikrohohlkugeln üblicherweise auf etwa das vierbis sechsfache ausgedehnt.

Geeignete Mikrohohlkugeln sind sowohl in expandierter als auch nicht expandierter Form kommerziell beispielweise unter dem Handelsnamen "Expancel®" von der Fa. Akzo Nobel erhältlich. Expandierte Mikrohohlkörper werden bevorzugt in Kombination mit duroplastischen Polymermaterialien als Komponente (A) und expandierbare Mikrohohlkörper werden bevorzugt mit thermoplastischen Polymermaterialien als Komponente (A) verwendet.

Erfindungsgemäß ist es bevorzugt, wenn die polymeren Mikrohohlkörper, insbesondere die polymeren Mikrohohlkugeln, einen mittleren Partikeldurchmesser von 5 µm bis 50 µm, besonders bevorzugt von 6 µm bis 40 µm im nicht expandierten Zustand aufweisen. Dementsprechend beträgt der mittlere Partikeldurchmesser der polymeren Mikrohohlkörper im expandierten Zustand vorzugsweise 20 µm bis 300 µm, besonders bevorzugt 24 µm bis 240 µm. Der mittlere Partikeldurchmesser der polymeren Mikrohohlkörper wird üblicherweise und hierin als D₅₀-Wert angegeben. Dieser kann beispielsweise mittels Lichtstreuung ermittelt werden. Ein Verfahren, wie die Bestimmung des D₅₀-Wertes beispielsweise durchgeführt werden kann, ist im Technical Bulletin Nr. 3B der Firma Akzo Nobel beschrieben.

Hinsichtlich der Menge des Polymermaterials als Komponente (A) wird eine Menge von 25 Gewichtsteilen bis 70 Gewichtsteilen, bezogen auf das Gesamtgewicht der Komponenten (A) und (B), in der Polymer-Zusammensetzung eingesetzt. Dementsprechend beträgt der Anteil der polymeren Mikrohohlkörper als Komponente (B) 30 Gewichtsteile bis 75 Gewichtsteile, bezogen auf das Gesamtgewicht der Komponenten (A) und (B), in der Polymer-Zusammensetzung. Liegt der Gewichtsanteil der polymeren Mikrohohlkörper als Komponente (B) innerhalb dieser Grenzen, wird ein Polymerschaum erhalten, der eine besonders niedrige Dichte und niedrige Wärmeleitfähigkeit besitzt. Unter dem Gesichtspunkt der Wärmeleitfähigkeit beträgt die Menge des Polymermaterials als Komponente (A) bevorzugt 25 Gewichtsteile bis 45 Gewichtsteile, bezogen auf das Gesamtgewicht der Komponenten (A) und (B), in der Polymer-Zusammensetzung. Dementsprechend beträgt der Anteil der polymeren Mikrohohlkörper als Komponente (B) vorzugsweise 55 Gewichtsteile bis 75 Gewichtsteile, bezogen auf das Gesamtgewicht der Komponenten (A) und (B), in der Polymer-Zusammensetzung.

Komponente (C) beschreibt übliche Zusatzstoffe, die in der erfindungsgemäß verwendeten Polymer-Zusammensetzung in wirksamen Mengen vorhanden sein können. Als übliche Zusatzstoffe können beispielsweise Verarbeitungsstabilisatoren (in einer Menge von 0,6 Gewichtsteilen bis 5 Gewichtsteilen, vorzugsweise etwa 2,5 Gewichtsteile; vorzugsweise Calcium-Zink-Stabilisatoren, Zinn-Stabilisatoren, Calcium-organische Stabilisatoren, Blei-Stabilisatoren und dergleichen), Stabilisatoren auf Phenol- oder Phosphitbasis, Gleitmittel (vorzugsweise in einer Menge von 0,01 Gewichtsteilen bis 3 Gewichtsteilen, insbesondere bevorzugt etwa 0,3 Gewichtsteile; beispielsweise Polyethylen- oder Polypropylenwachse, Esterwachse von Glykolen, Glycerin, Penta- und Dipentaerythrit oder andere Polyole mit geeigneten Carbonsäuren, Montanwachse, Paraffinwachse, Metallseifen und dergleichen), Pigmente (vorzugsweise in einer Menge von 0,01 Gewichtsteilen bis 6 Gewichtsteilen; beispielsweise Titandioxid, Calciumsulfat, Ultramarinblau, Ruße, Graphite und dergleichen), polymere Verarbeitungshilfsstoffe (vorzugsweise in einer Menge von 0,1 Gewichtsteilen bis 2,5 Gewichtsteilen, besonders bevorzugt etwa 1,2 Gewichtsteile; beispielsweise Methylmethacrylat-Polymere und Copolymere sowie fluorhaltige Polymere), Strukturierungsmittel (in beliebigen Mengen; beispielsweise Glaskugeln, Epoxidharze, Acrylatharze und dergleichen), Schlagzähmodifier (in einer Menge von 0 Gewichtsteilen bis 8 Gewichtsteilen; vorzugsweise etwa 4 Gewichtsteile; beispielsweise Acrylat-Modifier, chloriertes Polyethylen, Olefincopolymere oder Kautschuke und dergleichen), anorganische Füllstoffe oder Verstärkungsmittel (in einer Menge von 2 Gewichtsteilen bis 40 Gewichtsteilen, vorzugsweise etwa 15 Gewichtsteile; beispielsweise Kreide, Kalkstein, Marmor, Talkum, gefälltes Calciumcarbonat und dergleichen), Antistatika, UV-Absorber, Effektpigmente und dergleichen genannt werden. Darüber hinaus sind die wirksamen Mengen der möglichen Zusatzstoffe der Komponente (C) dem Fachmann bekannt. Die voranstehenden Gewichtsanteile beziehen sich wiederum jeweils auf die Summe der Komponenten (A) und (B) in der erfindungsgemäß verwendeten Polymer-Zusammensetzung als 100 Gewichtsteile.

Die vorstehenden Ausführungen hinsichtlich der Materialen für die Komponente (A) und (B), der Gewichtsanteile der Komponenten (A) und (B), des mittleren Partikeldurchmessers der Mikrohohlkörper gemäß Komponente (B) sowie der Materialien und Gewichtsanteile der üblichen Zusatzstoffe der Komponente (C) beziehen sich sowohl auf die erfindungsgemäße Verwendung der Polymer-Zusammensetzung als auch auf das erfindungsgemäße Kunststoff-Hohlkammerprofil, insbesondere auf das Kunststoff-Fensterprofil oder Kunststoff-Türprofil.

Die erfindungsgemäß verwendete Polymer-Zusammensetzung kann durch Mischen der Komponenten (A), (B) und ggf. (C) erfolgen. Dies geschieht zweckmäßigerweise unmittelbar vor der Verarbeitung durch Vermischen der festen, pulverförmigen Komponenten (A), (B) und (C) der Polymer-Zusammensetzung in dem Fachmann geläufigen, marktüblichen Mischvorrichtungen. Bevorzugt werden die erfindungsgemäß verwendeten Polymer-Zusammensetzungen in dem Fachmann an sich bekannter Art und Weise in Kunststoff-Hohlkammerprofilen, insbesondere in Kunststoff-Fensterprofile oder Kunststoff-Türprofile während des Extrusionsprozesses mit Hilfe eines Zuspritzextruders einextrudiert, wobei erfindungsgemäß mindestens eine Hohlkammer des erhaltenen Kunststoff-Hohlkammerprofils unter einer erfindungsgemäßen Verwendung ausgeschäumt wird. Die auf diese Weise erhaltenen Polymerschäume lassen sich annähernd rückstandsfrei aus dem Kunststoff-Hohlkammerprofil entnehmen. Darüber hinaus kann eine Verformung der mit derartigen Polymerschäumen gefüllten Hohlkammern und auch des gesamten Kunststoff-Hohlkammerprofils vermieden werden. Die erhaltenen Polymerschäume weisen eine sehr geringe Dichte auf, so dass ein Ausschäumen mindestens einer Hohlkammer mit möglichst wenig Material erzielt wird. Außerdem besitzen die erhaltenen Polymerschäume eine geringe Wärmeleitfähigkeit, die vorteilhafterweise über einen langen Zeitraum erhalten bleibt. Bei der Verwendung einer Polymer-Zusammensetzung mit duroplastischer Komponente (A) und expandierten Mikrohohlkörpern als Komponente (B) und ggf. einer Komponente (C) werden die Komponenten in dem Fachmann geläufigen, marktüblichen Mischvorrichtungen vermischt. Anschließend werden die fertigen Hohlkammerprofile in einem Offline-Verfahren in bevorzugter Weise mit Hilfe einer Lanze mit der Polymer-Zusammensetzung gefüllt und bei mindestens Raumtemperatur für bevorzugt 6 bis 12 Stunden ausgehärtet.

Gemäß der vorliegenden Erfindung ist es bevorzugt, dass zumindest die Haupthohlkammer des Kunststoff-Hohlkammerprofils, insbesondere des Kunststoff-Fensterprofils oder Kunststoff-Türprofils, unter der erfindungsgemäßen Verwendung einer Polymer-Zusammensetzung ausgeschäumt ist. Unter der Haupthohlkammer eines Kunststoff-Fensterprofils oder Kunststoff-Türprofils ist diejenige Kammer zu verstehen, in die üblicherweise die Stahlarmierung eingebracht ist oder die im Querschnitt gesehen den höchsten Anteil an der Querschnittsfläche einnimmt. Das Ausschäumen des Kunststoff-Hohlkammerprofils kann nach der Extrusion des Profils oder bevorzugt während der Extrusion des Profils durch ein so genanntes Inline-Schäumverfahren erfolgen. Als ein Beispiel für ein derartiges Inline-Schäumverfahren kann ein Verfahren zum Einsatz kommen, das in der WO 2012/052140 A1 beschrieben ist.

Um eine bessere Isolierwirkung des erfindungsgemäß ausgeschäumten Kunststoff-Hohlkammerprofils zu erzielen, können auch mehrere oder alle Hohlkammern des Kunststoff-Hohlkammerprofils erfindungsgemäß ausgeschäumt sein.

Nachstehend soll die vorliegende Erfindung unter Bezugnahme auf exemplarisch verwendete Polymer-Zusammensetzungen beschrieben werden. Es versteht sich, dass diese Beispiele nicht als die Erfindung in irgendeiner Weise einschränkend zu betrachten sind. Sofern nichts anderes angegeben ist, sind in der vorliegenden Anmeldung einschließlich der Ansprüche sämtliche Prozentangaben und Anteilsangaben auf das Gewicht bezogen.

### Beispiele

### Beispiel 1

Polymer-Zusammensetzungen, die 20 Gewichtsteile, 30 Gewichtsteile, 40 Gewichtsteile, 50 Gewichtsteile, 60 Gewichtsteile, 70 Gewichtsteile und 80 Gewichtsteile Expancel 461 DET 80 (vorexpandierte Mikrohohlkugeln mit einem mittleren Partikeldurchmesser von 80 µm) und respektive 80 Gewichtsteile, 70 Gewichtsteile, 60 Gewichtsteile, 50 Gewichtsteile, 40 Gewichtsteile, 30 Gewichtsteile bzw. 20 Gewichtsteile BECTRON PL4122-40E BLF FLZ 0,4 (dünnflüssiger Harzlack auf polymerer Urethan-Alkyd-Harzbasis, bezogen von der Firma Elantas Beck GmbH) enthielten, wurden unter Zugabe von Toluol als Lösungsmittel in einer Menge von 50 Gewichtsteilen jeweils in die Haupthohlkammer eines 1 m langen Stückes eines vorher extrudierten Kunststoff-Fensterprofils gegeben. Daraufhin ließ man das Gemisch bei Raumtemperatur aushärten.

Die auf diese Weise erhaltenen Polymer-Schäume wiesen eine Dichte von 70 bis 90 kg/m³ und eine Wärmeleitfähigkeit von 0,031 bis 0,033 W/mK auf. Sämtliche Polymerschäume ließen sich annähernd rückstandsfrei durch mechanisches Ziehen aus dem Kunststoff-Fensterprofil entfernen.

### Beispiel 2

Zur Herstellung eines Kunststoff-Fensterprofils wurde ein Kunststoff-Fensterprofil aus Polyvinylchlorid (Vinnolit® S3268, bezogen von der Firma Vinnolit GmbH & Co. KG) extrudiert. In einem Inline-Schäumverfahren wurde Expancel 951 MB 120 mit einem Gewichtsanteil von 30 Gewichtsteilen, 40 Gewichtsteilen, 50 Gewichtsteilen, 60 Gewichtsteilen, 65 Gewichtsteilen und 70 Gewichtsteilen in einer Matrix mit einem Gewichtsanteil von respektive 70 Gewichtsteilen, 60 Gewichtsteilen, 50 Gewichtsteilen, 40 Gewichtsteilen, 35 Gewichtsteilen bzw. 30 Gewichtsteilen aus einem Polymermaterial auf Ethylen-Vinylacetat-Monomer-Basis in die Haupthohlkammer des Kunststoff-Fensterprofils einextrudiert. Beim Austreten aus der Extrusionsdüse fand die Expansion der Expancel-Mikrohohlkugeln statt.

Es wurden Kunststoff-Fensterprofile mit ausgeschäumter Haupthohlkammer erhalten, wobei die Form und Anordnung der Hohlkammern des Kunststoff-Fensterprofils gegenüber nicht ausgeschäumten entsprechenden Kunststoff-Fensterprofilen unverändert waren.Die Wärmeleitfähigkeiten der Polymerschäume lagen im Bereich von 0,031 W/mK bis 0,037 W/mK, wobei die Dichte der Polymerschäume 8 kg/m³ bis 10 kg/m³ betrug. Die geringste Wärmeleitfähigkeit wurde dabei unter Einsatz von 65 Gewichtsteilen Mikrohohlkörpern und 35 Gewichtsteilen Polymermaterial auf Ethylen-Vinylacetat-Monomer-Basis erzielt. Für sämtliche eingesetzten Polymer-Zusammensetzungen ließen sich die im Inline-Verfahren in die Haupthohlkammer des Kunststoff-Fensterprofils einextrudierten Polymerschäume durch mechanisches Ziehen annähernd rückstandsfrei aus der Haupthohlkammer entfernen.

Voranstehend wurde die vorliegende Erfindung unter Bezugnahme auf Beispiele und Vergleichsbeispiele beschrieben. Für den Fachmann ist es jedoch ersichtlich, dass die Erfindung nicht auf diese Beispiele eingeschränkt ist, sondern sich der Umfang der vorliegenden Erfindung aus den beiliegenden Ansprüchen ergibt.

## Patentansprüche

1. Verwendung einer Polymer-Zusammensetzung, umfassend
(A) 25 Gewichtsteile bis 70 Gewichtsteile, bezogen auf das Gesamtgewicht der Komponenten (A) und (B), eines Polymermaterials;
(B) 30 Gewichtsteile bis 75 Gewichtsteile, bezogen auf das Gesamtgewicht der Komponenten (A) und (B), polymerer Mikrohohlkörper; und ggf.
(C) übliche Zusatzstoffe
zum Ausschäumen mindestens einer Hohlkammer eines Kunststoff-Hohlkammerprofils, insbesondere eines Kunststoff-Fensterprofils oder eines Kunststoff-Türprofils, wobei die polymeren Mikrohohlkörpern eine Hülle aus einem Polymer und ein darin aufgenommenes flüssiges Treibmittel umfassen, dessen Siedepunkt unterhalb der Glasübergangstemperatur des Polymers der polymeren Mikrohohlkörper liegt und die polymeren Mikrohohlkörper gegenüber dem Treibmittel im flüssigen oder gasförmigen Zustand im Wesentlichen undurchlässig sind.

2. Verwendung nach Anspruch 1, **dadurch gekennzeichnet, dass** das flüssige Treibmittel ausgewählt ist aus der Gruppe, umfassend Propan, n-Butan, Isobutan, Isopentan, n-Pentan, Neopentan, Cyclopentan, Hexan, Cyclohexan, Heptan und Butylether sowie halogenierte Kohlenwasserstoffe wie Methylchlorid, Methylenchlorid, Trichlormethan, Trichlorfluormethan und Dichlordifluormethan.

3. Verwendung nach Anspruch 1 oder Anspruch 2, **dadurch gekennzeichnet, dass** das flüssige Treibmittel bei Raumtemperatur in einem Volumenanteil, bezogen auf das Gesamtvolumen der polymeren Mikrohohlkörper mit dem darin aufgenommenen flüssigen Treibmittel, von mindestens 20 Vol-%, vorzugsweise 50 Vol.-% bis 95 Vol.-% in den polymeren Mikrohohlkörpern aufgenommen ist.

4. Verwendung nach einem der Ansprüche 1 bis 3, **dadurch gekennzeichnet, dass** das Polymermaterial der Komponente (A) zu einem Polymermaterial des Kunststoff-Hohlkammerprofils nicht kompatibel ist.

5. Verwendung nach Anspruch 3, **dadurch gekennzeichnet, dass** das Polymermaterial der Komponente (A) ausgewählt ist aus der Gruppe, umfassend thermoplastische Polymere wie Polyethylen, Polypropylen, Polymere auf Basis von Ethylen-Vinylacetat-Monomeren (EVA) sowie Gemische, Copolymere und Blends der genannten thermoplastischen Polymere; und duroplastische Polymere wie Epoxidharze, Phenol-Formaldehydharze, Harnstoff-Formaldehydharze und Melamin-Formaldehydharze sowie Gemische der genannten Harze; sowie polymere Urethan-Alkyd-Harze, polymere Acrylharze, polymere Alkydharze.

6. Verwendung nach einem der Ansprüche 1 bis 3, **dadurch gekennzeichnet, dass** als Polymermaterial der Komponente (A) das Polymermaterial des Kunststoff-Hohlkammerprofils eingesetzt wird, wobei es sich bei dem Polymermaterial der Komponente (A) sowie beim Polymermaterial des Kunststoff-Hohlkammerprofils vorzugsweise um Polyvinylchlorid (PVC), besonders bevorzugt Hart-PVC (PVC-U) handelt.

7. Verwendung nach einem der Ansprüche 1 bis 6, **dadurch gekennzeichnet, dass** die polymeren Mikrohohlkörper Homopolymere und/oder Copolymere auf Basis von Monomeren, ausgewählt aus der Gruppe, umfassend Acrylsäure, Acrylsäureester, Methacrylsäure, Methacrylsäureester, Styrol, Acrylnitril, Methacrylnitril und derartige Monomere sowie Mischungen der genannten Monomere, umfassen

8. Verwendung nach einem der Ansprüche 1 bis 7, **dadurch gekennzeichnet, dass** die Polymer-Zusammensetzung 25 Gewichtsteilen bis 45 Gewichtsteile, bezogen auf das Gesamtgewicht der Komponenten (A) und (B), Polymermaterial als Komponente (A) und 55 Gewichtsteile bis 75 Gewichtsteile, bezogen auf das Gesamtgewicht der Komponenten (A) und (B), der polymeren Mikrohohlkörper als Komponente (B) umfasst.

9. Verwendung nach einem der Ansprüche 1 bis 8, **dadurch gekennzeichnet, dass** die polymeren Mikrohohlkörper einen mittleren Partikeldurchmesser von 5 µm bis 50 µm im nicht expandierten Zustand aufweisen.

10. Kunststoff-Hohlkammerprofil, insbesondere Kunststoff-Fensterprofil oder Kunststoff-Türprofil, bei dem mindestens eine Hohlkammer zumindest teilweise unter Verwendung einer Polymer-Zusammensetzung gemäß einem der Ansprüche 1 bis 9 ausgeschäumt ist.

## Claims

1. Use of a polymer composition comprising
(A) from 25 parts by weight to 70 parts by weight, based on the total weight of components (A) and (B), of a polymer material;
(B) from 30 parts by weight to 75 parts by weight, based on the total weight of components (A) and (B), of hollow polymeric microbodies; and optionally
(C) conventional additives
for the foam-filling of at least one hollow chamber of a hollow-chamber plastics profile, in particular of a plastics window profile or of a plastics door profile, where the hollow polymeric microbodies comprise a shell made of a polymer and, contained therein, a liquid blowing agent, the boiling point of which is below the glass transition temperature of the polymer of the hollow polymeric microbodies, and the hollow polymeric microbodies are in essence impermeable to the blowing agent in the liquid or gaseous state.

2. Use according to Claim 1, **characterized in that** the liquid blowing agent is selected from the group comprising propane, n butane, isobutane, isopentane, n pentane, neopentane, cyclopentane, hexane, cyclohexane, heptane and butyl ether, and also halogenated hydrocarbons such as methyl chloride, methylene chloride, trichloromethane, trichlorofluoromethane and dichlorodifluoromethane.

3. Use according to Claim 1 or Claim 2, **characterized in that** the proportion by volume at room temperature of the liquid blowing agent contained in the hollow polymeric microbodies, based on the total volume of the hollow polymeric microbodies with the liquid blowing agent contained therein, is at least 20% by volume, preferably from 50% by volume to 95% by volume.

4. Use according to any of Claims 1 to 3, **characterized in that** the polymer material of component (A) is not compatible with a polymer material of the hollow-chamber plastics profile.

5. Use according to Claim 3, **characterized in that** the polymer material of component (A) is selected from the group comprising thermoplastic polymers such as polyethylene, polypropylene, polymers based on ethylene-vinyl acetate monomers (EVA), and also mixtures, copolymers and blends of the thermoplastic polymers mentioned; and thermoset polymers such as epoxy resins, phenol-formaldehyde resins, ureaformaldehyde resins and melamine-formaldehyde resins, and also mixtures of the resins mentioned; and also polymeric urethane-alkyd resins, polymeric acrylic resins, polymeric alkyd resins.

6. Use according to any of Claims 1 to 3, **characterized in that** the polymer material of the hollow-chamber plastics profile is used as polymer material of component (A) with the polymer material of component (A), and also the polymer material of the hollow-chamber plastics profile are preferably polyvinyl chloride (PVC), particularly preferably rigid PVC(uPVC).

7. Use according to any of Claims 1 to 6, **characterized in that** the hollow polymeric microbodies comprise homopolymers and/or copolymers based on monomers selected from the group comprising acrylic acid, acrylic ester, methacrylic acid, methacrylic ester, styrene, acrylonitrile, methacrylonitrile and similar monomers, and also mixtures of the monomers mentioned.

8. Use according to any of Claims 1 to 7, **characterized in that** the polymer composition comprises from 25 parts by weight to 45 parts by weight, based on the total weight of components (A) and (B), of polymer material as component (A), and from 55 parts by weight to 75 parts by weight, based on the total weight of components (A) and (B), of the hollow polymeric microbodies as component (B).

9. Use according to any of Claims 1 to 8, **characterized in that** the median particle diameter of the hollow polymeric microbodies in the unexpanded state is from 5 µm to 50 µm.

10. Hollow-chamber plastics profile, in particular plastics window profile or plastics door profile, in which at least one hollow chamber has been foam-filled at least to some extent with use of a polymer composition according to any of Claims 1 to 9.

## Revendications

1. Utilisation d'une composition polymère comprenant
(A) 25 parties en poids à 70 parties en poids, par rapport au poids total des composants (A) et (B), d'un matériau polymère ;
(B) 30 parties en poids à 75 parties en poids, par rapport au poids total des composants (A) et (B), de microcorps creux polymères ; et le cas échéant
(C) des additifs usuels
pour le remplissage par une mousse d'au moins une chambre creuse d'un profilé à chambre creuse en matériau synthétique, en particulier d'un profilé de fenêtre en matériau synthétique ou d'un profilé de porte en matériau synthétique, les microcorps creux polymères présentant une enveloppe en un polymère et un agent gonflant liquide logé en son sein, dont le point d'ébullition est inférieur à la température de transition vitreuse du polymère des microcorps creux polymères et les microcorps creux polymères étant pratiquement imperméables à l'agent gonflant à l'état liquide ou gazeux.

2. Utilisation selon la revendication 1, **caractérisée en ce que** l'agent gonflant liquide est choisi dans le groupe comprenant le propane, le n-butane, l'isobutane, l'isopentane, le n-pentane, le néopentane, le cyclopentane, l'hexane, le cyclohexane, l'heptane et le butyléther ainsi que les hydrocarbures halogénés, tels que le chlorure de méthyle, le chlorure de méthylène, le trichlorométhane, le trichlorofluorométhane et le dichlorodifluorométhane.

3. Utilisation selon la revendication 1 ou la revendication 2, **caractérisée en ce que** l'agent gonflant liquide est logé, à température ambiante, dans une proportion volumique, par rapport au volume total des microcorps creux polymères présentant l'agent gonflant liquide logé en leur sein, d'au moins 20% en volume, de préférence de 50% en volume à 95% en volume, dans les microcorps creux polymères.

4. Utilisation selon l'une quelconque des revendications 1 à 3, **caractérisée en ce que** le matériau polymère du composant (A) n'est pas compatible avec un matériau polymère du profilé à chambre creuse en matériau synthétique.

5. Utilisation selon la revendication 3, **caractérisée en ce que** le matériau polymère du composant (A) est choisi dans le groupe, comprenant les polymères thermoplastiques, tels que le polyéthylène, le polypropylène, les polymères à base de monomères d'éthylène-acétate de vinyle (EVA) ainsi que des mélanges, des copolymères et des assemblages des polymères thermoplastiques mentionnés ; et les polymères thermodurcissables, tels que les résines époxydes, les résines de phénolformaldéhyde, les résines d'urée-formaldéhyde et les résines de mélamineformaldéhyde ainsi que les mélanges des résines mentionnées ; ainsi que les résines polymères d'uréthane-alkyde, les résines polymères d'acryle et les résines polymères d'alkyde.

6. Utilisation selon l'une quelconque des revendications 1 à 3, **caractérisée en ce qu'**on utilise, comme matériau polymère du composant (A), le matériau polymère du profilé à chambre creuse en matériau synthétique, où il s'agit, pour le matériau polymère du composant (A) ainsi que pour le matériau polymère du profilé à chambre creuse en matériau synthétique, de préférence de poly(chlorure de vinyle) (PVC), de manière particulièrement préférée de PVC dur (PVC-U).

7. Utilisation selon l'une quelconque des revendications 1 à 6, **caractérisée en ce que** les microcorps creux polymères comprennent des homopolymères et/ou des copolymères à base de monomères, choisis dans le groupe comprenant l'acide acrylique, les esters d'acide acrylique, l'acide méthacrylique, les esters d'acide méthacrylique, le styrène, l'acrylonitrile, le méthacrylonitrile et des monomères analogues ainsi que des mélanges des monomères mentionnés.

8. Utilisation selon l'une quelconque des revendications 1 à 7, **caractérisée en ce que** la composition polymère comprend 25 parties en poids à 45 parties en poids, par rapport au poids total des composants (A) et (B), de matériau polymère comme composant (A) et 55 parties en poids à 75 parties en poids, par rapport au poids total des composants (A) et (B), des microcorps creux polymères comme composant (B).

9. Utilisation selon l'une quelconque des revendications 1 à 8, **caractérisée en ce que** les microcorps creux polymères présentent un diamètre moyen de particule de 5 µm à 50 µm à l'état non dilaté.

10. Profilé à chambre creuse en matériau synthétique, en particulier profilé de fenêtre en matériau synthétique ou profilé de porte en matériau synthétique, dans lequel au moins une chambre creuse est remplie par une mousse, au moins partiellement, en utilisant une composition polymère selon l'une quelconque des revendications 1 à 9.
